(19) Europäisches Patentamt / European Patent Office / Office européen des brevets

(11) **EP 3 838 865 B1**

(12) **FASCICULE DE BREVET EUROPEEN**

(45) Date de publication et mention de la délivrance du brevet:
**15.01.2025 Bulletin 2025/03**

(21) Numéro de dépôt: **20214945.6**

(22) Date de dépôt: **17.12.2020**

(51) Classification Internationale des Brevets (IPC):
**C04B 35/26** (2006.01)    **C04B 35/622** (2006.01)
**H01F 1/34** (2006.01)    **H01F 10/24** (2006.01)

(52) Classification Coopérative des Brevets (CPC):
**C04B 35/2616; C04B 35/2666; C04B 35/2675; C04B 35/622; H01F 1/346; H01F 10/245;**
C04B 2235/3203; C04B 2235/3208;
C04B 2235/3217; C04B 2235/3224;
C04B 2235/3225; C04B 2235/3244;
C04B 2235/3275; C04B 2235/3281;
C04B 2235/3286;    (Cont.)

(54) **MATERIAU FERRITE DE STRUCTURE GRENAT A BASSE TEMPERATURE DE FRITTAGE POUR COFRITTAGE AVEC UNE METALLISATION ARGENT OU OR ET PROCEDE DE FABRICATION DU MATERIAU FERRITE**

**FERRITMATERIAL MIT GRANATSTRUKTUR MIT NIEDRIGER SINTERTEMPERATUR ZUM CO-SINTERN MIT EINER SILBER- ODER GOLDMETALLVEREDELUNG, UND VERFAHREN ZUR HERSTELLUNG DES FERRITMATERIALS**

**GARNET STRUCTURE FERRITE MATERIAL WITH LOW SINTERING TEMPERATURE FOR CO-SINTERING WITH SILVER OR GOLD METALLISATION AND METHOD FOR MANUFACTURING THE FERRITE MATERIAL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2019 FR 1914830**

(43) Date de publication de la demande:
**23.06.2021 Bulletin 2021/25**

(73) Titulaire: **THALES**
**92190 Meudon (FR)**

(72) Inventeurs:
• **QASSYM, Lilia**
**91767 PALAISEAU Cedex (FR)**
• **LEBOURGEOIS, Richard**
**91767 PALAISEAU Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 2 622 613    CN-A- 110 483 032**
**FR-A1- 2 555 160**

• **LI HAIYAN ET AL: "Preparation and Research of Bi-YIG Nanoparticles via LTCC", JOURNAL OF ELECTRONIC MATERIALS, WARRENDALE, PA, US, vol. 47, no. 12, 22 September 2018 (2018-09-22), pages 7251 - 7257, XP036626961, ISSN: 0361-5235, [retrieved on 20180922], DOI: 10.1007/S11664-018-6658-Y**
• **YANG WENGTING ET AL: "Effects of Li2CO3addition on the microstructure and magnetic properties of low-temperature-fired NiCuZn ferrites", CERAMICS INTERNATIONAL, ELSEVIER, AMSTERDAM, NL, vol. 42, no. 13, 13 June 2016 (2016-06-13), pages 14609 - 14613, XP029642435, ISSN: 0272-8842, DOI: 10.1016/J.CERAMINT.2016.06.078**

- **XIE F ET AL: "Influences of Li2O-B2O3-SiO2 Glass Addition on Microstructural and Magnetic Properties of LiZnTi Ferrites", IEEE TRANSACTIONS ON MAGNETICS, IEEE SERVICE CENTER, NEW YORK, NY, US, vol. 51, no. 11, November 2015 (2015-11-01), pages 1 - 4, XP011587403, ISSN: 0018-9464, [retrieved on 20151023], DOI: 10.1109/TMAG.2015.2437365**

(52) Classification Coopérative des Brevets (CPC):
(Cont.)C04B 2235/3298; C04B 2235/3418; C04B 2235/764; C04B 2237/34; C04B 2237/408; C04B 2237/68

**Description**

Le domaine de l'invention est celui des circulateurs et des isolateurs hyperfréquence. Ces dispositifs non-réciproques sont utilisés dans le cas d'émission/réception simultanée ou en mode isolateurs, dans le but de protéger la source des désadaptations d'impédance.

Plus précisément, la présente invention concerne des nouveaux matériaux et leur réalisation pour intégration dans les circulateurs/isolateurs hyperfréquence.

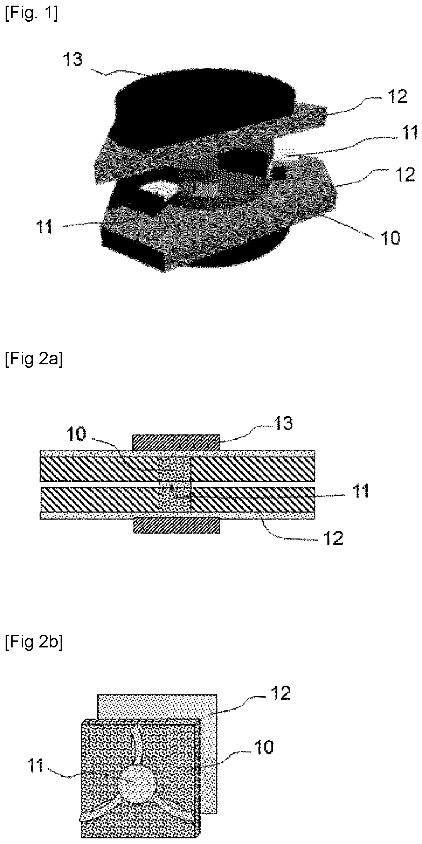

La figure 1 illustre le schéma d'un circulateur triplaque constitué de 3 principaux éléments :

- le ferrite **10,** à l'origine de la non-réciprocité du circulateur sous l'effet d'un champ magnétique. Il peut avantageusement s'agir d'un grenat pour des applications entre 1 et 12 GHz ;
- les lignes conductrices **11,** pouvant être en or ou en argent ;
- des plans de masse **12** ;
- l'aimant permanent **13.**

Un enjeu lors de la réalisation de tels dispositifs, notamment utilisés dans les antennes électroniques à balayage actif, est la réduction de leur coût et de leur taille sans dégradation de leurs performances.

Pour cela, ces dispositifs peuvent avantageusement être réalisés par cofrittage. Cette technique permet :

- de réduire le nombre d'étapes lors de la réalisation des assemblages : (en effet, les différents éléments constituant un circulateur sont assemblés mécaniquement) et ainsi de simplifier la réalisation d'un circulateur en technologie triplaque ou ligne microruban (*microstrip*) ;
- de s'affranchir de l'utilisation de colle qui altère les performances des dispositifs ainsi que leur durée de vie.

Les figures 2a et 2b illustrent à cet effet des schémas respectivement des technologies triplaque et ligne microruban *(microstrip),* soit respectivement une structure présentant un aimant **13,** un ferrite central **10** une Jonction Y **11** et un plan de masse **12.** La figure 2b met en évidence un plan de masse **12,** un ferrite **10** et une jonction Y **11.**

Le processus de réalisation de ces dispositifs est long et coûteux et l'assemblage mécanique des différents éléments est complexe. Afin de simplifier ce processus, l'adaptation des différents matériaux à un procédé de cofrittage peut être une solution.

Dans le but de cofritter avec de l'or ou de l'argent, il est indispensable d'adapter le matériau central, le ferrite, responsable de l'effet non-réciproque du circulateur lorsqu'il est soumis à un champ magnétique.

Un matériau ferrite particulièrement bien adapté aux applications visées dans la présente invention et notamment pour des applications dans le domaine de fréquence [1GHz, 12GHz] est un grenat ferrimagnétique d'yttrium fer (YIG).

Les métaux envisagés pour la réalisation des pistes métalliques cofrittées étant généralement l'or et l'argent, les températures de fusion de ces métaux étant respectivement 1064 et 962 °C, il est donc primordial d'adapter la température de frittage du ferrite. Le Grenat d'yttrium fer (YIG) présente une température de frittage élevée de 1450-1500°C. Il ne peut donc être envisagé de le coffriter avec de l'or ou de l'argent.

Des études publiées dans les demandes de brevet EP1829061A1, EP2622613A1, la thèse de L. Pinier (Nouveaux grenats ferrimagnétiques à basse température de frittage pour applications micro-ondes. Thèse de doctorat de l'Ecole Polytechnique, 2006) et la thèse de L. Qassym (Etude et mise au point de ferrites de structure grenat à basse température de frittage pour intégration dans les circulateurs hyperfréquences. Thèse de doctorat de l'Université Paris Saclay, 2017) ont montré qu'il est possible de fritter les ferrites grenats dérivés du YIG en dessous de leurs températures de frittage initiales. Plus précisément :

- le YIG substitué Cu et Bi présente une température de frittage abaissée à 950°C;
- le YIG substitué Cu, Bi, V présente une température de frittage abaissée à 900°C.

Il a ainsi été démontré que l'on peut cofritter ces nouveaux grenats substitués Bi-Cu-V avec de l'or mais, dans l'optique d'une réduction des coûts, il devient souhaitable de pouvoir cofritter ces nouveaux grenats avec de l'argent.

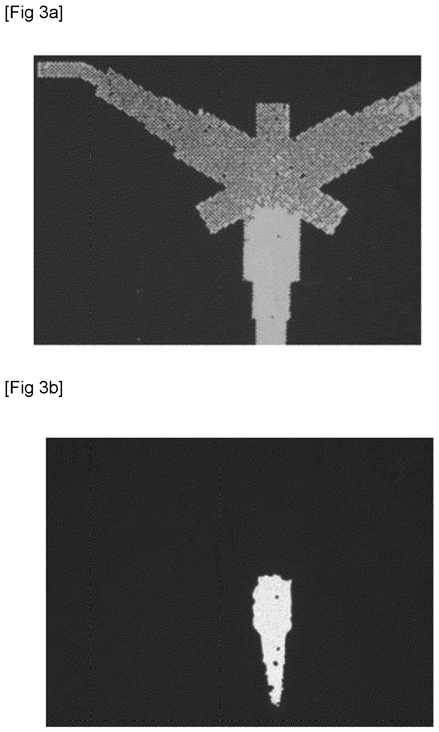

En effet, l'utilisation combinée du cuivre et du bismuth permet un abaissement de la température de frittage. Cependant cette diminution s'avère insuffisante pour la réalisation de dispositifs cofrittés avec de l'argent (la température de fusion de l'argent - 962°C - étant trop proche de la température de frittage - 950 °C). Le vanadium a ainsi été ajouté comme substituant supplémentaire. Cette action sur la température de frittage est importante et la densification de ce matériau a lieu à moins de 900 °C. En théorie, ce matériau serait compatible pour un cofrittage avec de l'argent. Ce n'est malheureusement pas le résultat obtenu. En effet, en raison d'une affinité entre les oxydes de vanadium et l'argent à basse température, un phénomène de diffusion (et altération du motif métallique) a été observé par le Demandeur, comme le montrent les images illustrées en figures 3a et 3b représentatives de résultats de test avec un dépôt d'argent sur un substrat cru correspondant à un substrat obtenu après calcination et avant frittage (figure 3a) et après frittage à 850°C (figure 3b).

Ces substitutions au vanadium, bien que permettant de diminuer suffisamment la température de frittage, ne permettent donc pas de disposer d'un ferrite permettant un cofrittage avec de l'argent.

Dans ce contexte, le Demandeur propose une autre solution passant par un nouveau matériau ferrite comprenant du lithium. Ce nouveau matériau ferrite peut être obtenu avantageusement à partir de l'ajout à de la poudre calcinée (ou chamottée) de ferrite dit « cru » avant frittage de sel de lithium comme fondant. La phase fondante, ayant une température de fusion peu élevée, permet d'aider le frittage.

Le sel de lithium utilisé peut avantageusement être par exemple du carbonate de lithium, sa température de fusion étant de 723 °C.

Plus précisément la présente invention a pour objet un matériau ferrite caractérisé en ce qu'il répond à la formule chimique suivante :

$$(1-x) \, (Y_a TR_b Bi_{b'} Fe_c Al_d In_e Ca_f Cu_g Zr_h Co_i Si_j O_{12 \pm \gamma}) + x \, (Li_2CO_3 \text{ ou } Li_2O \text{ ou } LiF \text{ ou } LiCl)$$

avec x% massique compris entre 0,1 et 2
avec TR : une terre rare ou une combinaison de terres rares ne comprenant pas l'élément Y

$$-1 \leq \gamma \leq 1 \; ;$$

$$3 \, (a+b+b'+c+d+e) + 2 \, (f+g+i) + 4 \, (h+j) = 24 \pm 2\gamma$$

$$0 \leq a \leq 2 \; ;$$

$$0 \leq b \leq 1,5 \; ;$$

$$0,1 < b' < 3 \; ;$$

$$4 \leq c \leq 5 \; ;$$

$$0 \leq d \leq 1,5 \; ;$$

$$0 \leq e \leq 0,8 \; ;$$

$$0 \leq f \leq 1;$$

$$0 < g < 0,05$$

$$0 \leq h \leq 1 \; ;$$

$$0 \leq i \leq 0,5 \; ;$$

$$0 \leq j \leq 0,5.$$

Avantageusement le taux de Bi peut être relativement élevé et au moins supérieur ou égal à 0,67.

L'invention a aussi pour objet un composant comprenant le matériau ferrite selon l'invention et des métallisations avantageusement en argent. Le composant peut être un circulateur ou un isolateur.

L'invention a encore pour objet un procédé de fabrication d'un matériau ferrite selon l'invention, ledit procédé comprenant :

- la pesée de matières premières de type oxydes ou carbonates;
- un premier broyage desdites matières premières ;
- une étape de calcination (encore dénommée chamottage) desdites matières premières broyées à une température comprise entre 750°C et 850°C permettant d'obtenir une poudre de matériau ferrite cru ;
- un second broyage de ladite poudre de matériau ferrite cru ;
- l'ajout d'un fondant de sel de lithium étant $Li_2CO_3$, $Li_2O$, LiF ou LiCl, à ladite poudre de matériau ferrite cru.

Le matériau ferrite résultant de la poudre de matériau ferrite cru et du fondant de sel de lithium peut avantageusement être fritté à une température comprise entre 850°C et 950°C.

L'invention a encore pour objet un procédé de fabrication d'un composant comportant plusieurs éléments dont un matériau ferrite selon l'invention, caractérisé en ce que :

- on prépare ledit matériau ferrite selon le procédé de l'invention ;
- on réalise une opération de frittage durant laquelle on solidarise ledit ferrite à au moins un desdits autres éléments dudit composant ou à un précurseur (métal or ou argent, diélectrique à basse température de frittage, ferrite à basse température de frittage ...) dudit élément par un procédé de cofrittage.

Dans le composant, l'un au moins des autres éléments est une couche de métal et avantageusement de l'argent.

L'invention sera mieux comprise et d'autres avantages apparaîtront à la lecture de la description qui va suivre donnée à titre non limitatif et grâce aux figures annexées parmi lesquelles :

[Fig 1] illustre le schéma d'un circulateur triplaque selon l'art connu ;
[Fig 2a] illustre un circulateur triplaque selon l'art connu pouvant être réalisé par cofrittage ;
[Fig 2b] illustre un circulateur ligne microruban *(microstrip)* selon l'art connu pouvant être réalisé par cofrittage ;
[Fig 3a] illustre des résultats de test de recuit avec un dépôt d'argent sur un substrat cru, réalisé à partir d'un ferrite de l'art antérieur comprenant un substituant de vanadium ;
[Fig 3b] illustre des résultats de test de coffrittage d'un ferrite de l'art antérieur avec l'ajout d'un substituant de vanadium avec un dépôt d'argent, après frittage à 850°C ;
[Fig 4] fournit l'évolution du retrait en % en fonction de la température de frittage pour différents ferrites de l'art connu et pour des ferrites de l'invention ;
[Fig 5] illustre les valeurs de permittivité de matériaux ferrites de l'invention en fonction de la fréquence exprimée en Hertz ;
[Fig 6a] illustre les résultats de test de recuit avec un dépôt d'argent sur un substrat cru et de test de coffritage réalisés à partir d'un exemple de ferrite B de l'invention ;
[Fig 6b] illustre les résultats de test de recuit avec un dépôt d'argent sur un substrat cru et de test de coffritage réalisés à partir d'un exemple de ferrite E de l'invention.

De manière générale, le matériau ferrite de l'invention répond à la formule chimique suivante :

$$(1-x) \, (Y_a TR_b Bi_{b'} Fe_c Al_d In_e Ca_f Cu_g Zr_h Co_i Si_j O_{12 \pm \gamma}) + x \, (Li_2CO_3 \text{ ou } Li_2O \text{ ou } LiF \text{ ou } LiCl)$$

avec x% massique compris entre 0,1 et 2
avec TR : une terre rare ou une combinaison de terres rares ne comprenant pas l'élément Y

$$-1 \leq \gamma \leq 1 \ ;$$

$$3 \, (a+b+b'+c+d+e) + 2 \, (f+g+i) + 4 \, (h+j) = 24 \pm 2\gamma$$

$$0 \leq a \leq 2 \ ;$$

$$0 \leq b \leq 1,5 \ ;$$

$$0,1 < b' < 3 \ ;$$

$$4 \leq c \leq 5 \, ;$$

$$0 \leq d \leq 1,5 \, ;$$

$$0 \leq e \leq 0,8 \, ;$$

$$0 \leq f \leq 1 \, ;$$

$$0 < g < 0,05$$

$$0 \leq h \leq 1 \, ;$$

$$0 \leq i \leq 0,5 \, ;$$

$$0 \leq j \leq 0,5.$$

Il est à noter que le matériau ferrite répondant à la formule chimique de la présente invention peut être un matériau ferrite cru ou un matériau fritté. Dans le cas d'un matériau cru, le matériau peut se présenter sous la forme d'une bande obtenue par coulage, de 50 à 200 $\mu$m d'épaisseur, préférentiellement de 100 $\mu$m d'épaisseur environ. Dans ce cas, le matériau est constitué majoritairement du ferrite et du fondant pouvant être $Li_2CO_3$ ou LiF ou LiCl.

Dans le cas d'un matériau fritté, le matériau sera constitué majoritairement du ferrite et de $Li_2O$.

Les terres rares peuvent être utilisées dans le but de modifier l'aimantation à saturation ou d'améliorer la tenue en puissance.

L'utilisation du cuivre et du bismuth permet de diminuer la température de frittage.

L'introduction du zirconium permet d'adapter l'aimantation à saturation (augmentation ou diminution).

Le bismuth peut aussi être utilisé dans le but d'augmenter la permittivité.

Le calcium peut être utilisé pour contrebalancer les charges positives en excès dues à l'introduction de zirconium. Il peut permettre de stabiliser la maille dans le cas de l'utilisation d'un taux important de bismuth par exemple.

La substitution du fer par de l'aluminium peut permettre une réduction des largeurs de raie et une diminution de l'aimantation à saturation.

Les matériaux ferrites de la présente invention sont réalisés selon un procédé classique de synthèse céramique. Les différentes étapes sont :

- la pesée des matières premières ;
- le broyage du mélange préalablement obtenu ;
- une étape de calcination encore appelée chamottage ayant pour but de synthétiser la phase grenat sous forme de poudre et obtenir une poudre de matériau ferrite dit cru ;
- une seconde étape de broyage ;
- l'introduction d'un ajout fondant à base de lithium : l'ajout de fondant a lieu sur la phase calcinée (phase grenat formée par traitement thermique). Il est ajouté à la phase calcinée grâce à un mélangeur (mélangeur à pales, attritor, jarre ...).

Après cet ajout de fondant, des étapes classiques de mise en forme et de frittage peuvent être réalisées. Le frittage à plus haute température de la poudre chamottée rebroyée a pour but de densifier la céramique tout en lui conférant la forme souhaitée.

Le premier et le second broyage sont avantageusement effectués en milieu humide.

Le frittage de la poudre rebroyée est avantageusement effectué sous air ou sous oxygène.

Les opérations de broyage sont avantageusement effectuées avec un broyeur à boulets et/ou par attrition.

Les performances obtenues sont décrites ci-après dans le cadre d'un exemple, non conforme à l'invention, comportant l'utilisation de carbonate de lithium comme fondant et en comparaison avec des matériaux ferrites ne comprenant pas d'ajout de fondant à base de lithium.

Afin de mettre en évidence l'effet de l'utilisation de carbonate de lithium fondant, quatre matériaux ont été comparés. Le choix du matériau de référence s'est porté sur un grenat d'yttrium fer substitué bismuth et cuivre (température de frittage de 950 °C) : le Ferrite **A** : $Y_{2,28}Cu_{0,05}Bi_{0,67}Fe_5O_{12}$.

Le Demandeur a aussi utilisé un ferrite $Y_{2,28}Cu_{0,05}Bi_{0,67}Fe_5O_{12}$ cru lors de l'opération d'ajout de fondant à base de lithium pour réaliser les ferrites suivants :

- Ferrite **B** obtenu à partir de $Y_{2,28}Cu_{0,05}Bi_{0,67}Fe_5O_{12}$ + 0,16% massique de $Li_2CO_3$ ;
- Ferrite **C** obtenu à partir de $Y_{2,28}Cu_{0,05}Bi_{0,67}Fe_5O_{12}$ + 0,32% massique de $Li_2CO_3$ ;
- Ferrite **D** obtenu à partir de $Y_{2,28}Cu_{0,05}Bi_{0,67}Fe_5O_{12}$ + 0,65% massique de $Li_2CO_3$.

Le Demandeur a effectué également des comparaisons avec le Ferrite **E** : $Y_{2,23}Cu_{0,05}Ca_{0,05}Bi_{0,67}Fe_{4,95}V_{0,05}O_{12}$.

Le Demandeur a réalisé des mesures d'analyse thermomécanique sur des cylindres de ferrite permettant de suivre l'évolution du retrait du matériau au cours du procédé de traitement thermique. La technique consiste à mesurer pendant le cycle de frittage la variation de hauteur du cylindre à l'aide d'un palpeur en alumine.

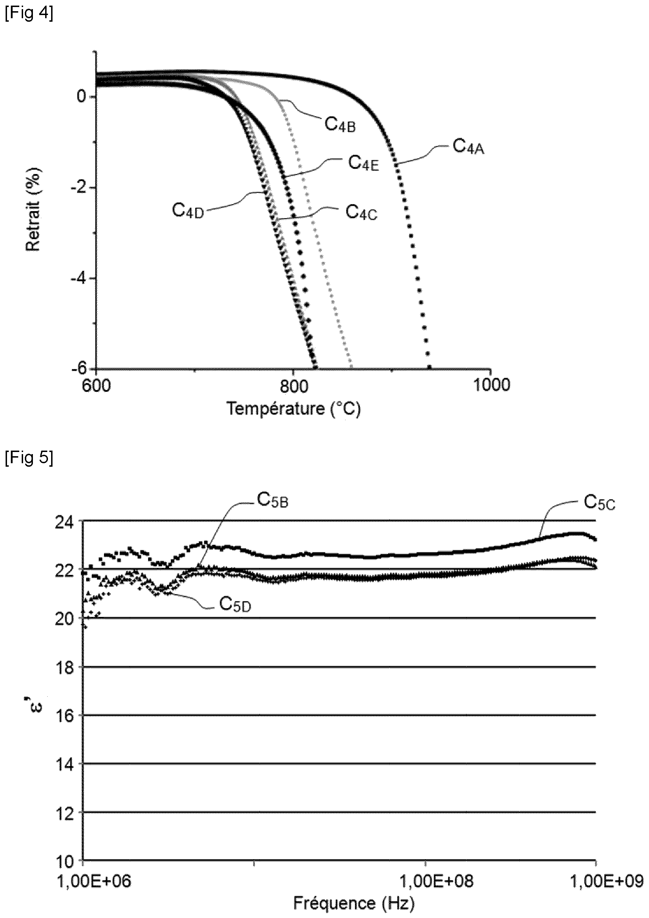

Les courbes $C_{4A}$, $C_{4B}$, $C_{4C}$, $C_{4D}$, $C_{4E}$ illustrées en figure 4 montrent l'évolution du retrait (en suivant l'épaisseur du cylindre) en % en fonction de la température de frittage respectivement pour les différents matériaux ferrites **A, B, C, D** et **E**. Durant ces tests, on suit l'évolution du retrait durant le frittage, en fonction de la température de frittage.

Les courbes de dilatométrie permettent de mettre en évidence l'impact sur la densification de l'ajout du carbonate de lithium fondant.

En comparaison avec le matériau ferrite **A,** l'opération de frittage pour les matériaux **B, C, D** et **E** commence à basse température (entre 750 et 800°C contre plus de 850°C pour le matériau ferrite **A**).

On remarque aussi que lorsque le taux de lithium passe de 0,16 à 0,32%, le frittage commence à plus basse température alors qu'il semble se stabiliser pour le taux de 0,65%, dans l'exemple concerné.

Ces premiers résultats ont permis de mettre en évidence l'efficacité du carbonate de lithium fondant dans le but de diminuer la température de frittage.

Un autre aspect à prendre en compte concerne l'impact du carbonate de lithium fondant sur les propriétés électromagnétiques du matériau.

Les courbes $C_{5B}$, $C_{5C}$ et $C_{5D}$ de la figure 5 fournissent les valeurs de permittivité des matériaux ferrites **B, C** et **D,** illustrant les résultats de mesure de l'aimantation à saturation des différents matériaux ainsi que leurs propriétés diélectriques à basse fréquence (entre 1MHz et 1GHz).

Les valeurs de la permittivité ne semblent pas être affectées par l'ajout de lithium fondant avec un coefficient $\varepsilon'$ d'environ 21, valeur élevée due à la présence de bismuth dans la maille (comme décrit dans une précédente demande de brevet déposée par le demandeur et publiée sous le numéro FR 3044309).

Les pertes diélectriques de ces matériaux sont de l'ordre de quelques $10^{-3}$, valeurs tout à fait acceptables pour le type d'application ciblée et de l'ordre de grandeur de celle des matériaux ferrites **A** et **E.**

Le Demandeur a également réalisé des tests de cofrittage. Les pièces ont été frittées à 850°C, température de frittage recommandée pour les encres métalliques.

Afin de réaliser une comparaison, les tests sont effectués sur les matériaux **B** et **E** (présentant une densité suffisante lorsqu'ils sont frittés à basse température).

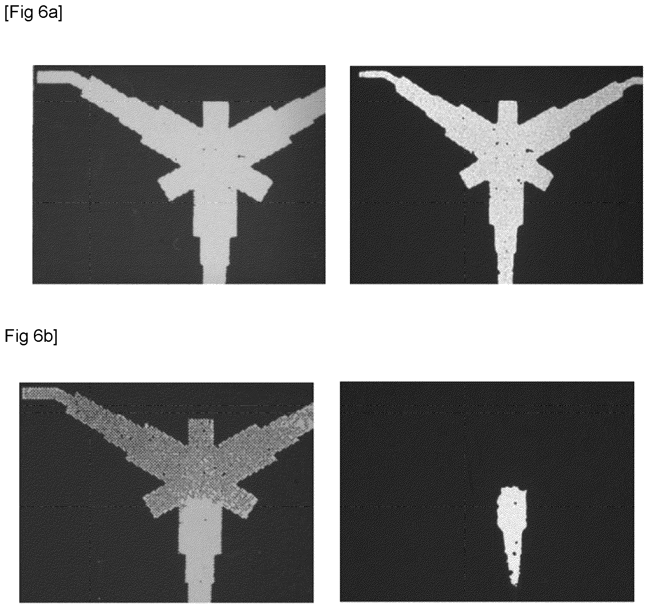

Les figures 6a et 6b sont relatives respectivement au matériau ferrite **B** et au matériau ferrite **E.**

Plus précisément les figures de gauche sont relatives à des tests de recuit (calcination) avec de l'argent des matériaux **B** et **E** cru, les figures de droite sont relatives à des tests de matériaux **B** et **E** frittés à 850°C.

Le cofrittage du matériau **E** et de l'argent met en évidence de la diffusion. Cette diffusion n'est observée que pour le matériau **E.** Dans le cas du cofrittage du ferrite **B** avec l'argent, le motif sérigraphié reste intègre.

L'efficacité de l'ajout de $Li_2CO_3$ a été également observée pour des grenats substitués par le cuivre, le bismuth, le calcium, l'aluminium et le gadolinium.

L'application directe de la présente invention est la réalisation de circulateurs et isolateurs en technologie LTCC (Low Température Cofired Ceramics) ou autre technologie additive. La présente invention permet de simplifier des assemblages complexes grâce au cofrittage : le nombre d'étape de réalisation est réduit. De plus il est possible de s'affranchir de l'utilisation de colles qui dégradent les propriétés et qui en font une technologie moins durable.

Il est rappelé par ailleurs qu'il n'était pas possible, jusqu'à présent, de cofritter un ferrite grenat avec de l'argent (problème de température de frittage ou de compatibilité avec l'argent), la présente invention permet de s'affranchir du problème de diffusion et rend possible le cofrittage du grenat mentionné précédemment et de l'argent à moins de 900 °C (gain en temps et en coût).

## Revendications

**1.** Matériau ferrite **caractérisé en ce qu'**il répond à la formule chimique suivante :

$$(1\text{-}x)\ (Y_aTR_bBi_b\cdot Fe_cAl_dIn_eCa_fCu_gZr_hCo_iSi_jO_{12\pm\gamma}) + x\ (Li_2CO_3 \text{ ou } Li_2O \text{ ou } LiF \text{ ou } LiCl)$$

avec x% massique compris entre 0,1 et 2

avec TR : une terre rare ou une combinaison de terres rares ne comprenant pas l'élément Y

$$-1 \leq \gamma \leq 1 \ ;$$

$$3 \ (a+b+b'+c+d+e) + 2 \ (f+g+i) + 4 \ (h+j) = 24 \pm 2\gamma$$

$$0 \leq a \leq 2 \ ;$$

$$0 \leq b \leq 1,5 \ ;$$

$$0,1 < b' < 3 \ ;$$

$$4 \leq c \leq 5 \ ;$$

$$0 \leq d \leq 1,5 \ ;$$

$$0 \leq e \leq 0,8 \ ;$$

$$0 \leq f \leq 1;$$

$$0 < g < 0,05$$

$$0 \leq h \leq 1 \ ;$$

$$0 \leq i \leq 0,5 \ ;$$

$$0 \leq j \leq 0,5.$$

2. Matériau ferrite selon la revendication 1, dans lequel $0,67 \leq b' < 3$

3. Composant comprenant le matériau ferrite selon l'une des revendications 1 ou 2, et des métallisations pouvant être en argent.

4. Circulateur comprenant le matériau ferrite selon l'une des revendications 1 ou 2 et des métallisations pouvant être en argent.

5. Isolateur comprenant le matériau ferrite selon l'une des revendications 1 ou 2 et des métallisations pouvant être en argent.

6. Procédé de fabrication d'un matériau ferrite selon l'une des revendications 1 ou 2, ledit procédé comprenant :

   - la pesée de matières premières de type oxydes ou carbonates;
   - un premier broyage desdites matières premières ;
   - une étape de calcination (encore dénommée chamottage) desdites matières premières broyées à une température comprise entre 750°C et 800°C permettant d'obtenir le matériau ferrite cru ;
   - un second broyage de ladite poudre de matériau ferrite cru ;
   - l'ajout d'un fondant de sel de lithium étant $Li_2CO_3$, $Li_2O$, LiF ou LiCl, à ladite poudre de matériau ferrite cru.

7. Procédé de fabrication d'un composant comportant plusieurs éléments dont un matériau ferrite selon l'une des revendications 1 ou 2, **caractérisé en ce que** :

- on prépare ledit matériau ferrite par le procédé selon la revendication 6;
- on réalise une opération de frittage durant laquelle on solidarise ledit matériau ferrite à au moins un desdits autres éléments dudit composant ou à un précurseur dudit élément par un procédé de cofrittage.

8. Procédé de fabrication d'un composant, selon la revendication 7, **caractérisé en ce que** l'un au moins des autres éléments est une couche de métal.

9. Procédé de fabrication d'un composant, selon la revendication 8, **caractérisé en ce que** le métal est de l'argent.

**Patentansprüche**

1. Ferritmaterial, **dadurch gekennzeichnet, dass** es die folgende chemische Formel aufweist:

$$(1\text{-}x)\ (Y_aTR_bBi_{b'}\!\cdot\!Fe_cAl_dIn_eCa_fCu_gZr_hCo_iSi_jO_{12\pm\gamma}) + x\ (Li_2CO_3\ \text{oder}\ Li_2O\ \text{oder}\ LiF\ \text{oder}\ LiCl),$$

wobei x Gewichts-% zwischen 0,1 und 2 liegt;
wobei TR eine Seltenerde oder eine Seltenerdenkombination ist, die das Element Y nicht umfasst;

$$-1 \leq \gamma \leq 1;$$

$$3\ (a + b + b' + c + d + e)\ +\ 2\ (f + g + i)\ +\ 4\ (h + j) = 24 \pm 2\gamma;$$

$$0 \leq a \leq 2;$$

$$0 \leq b \leq 1,5;$$

$$0,1 < b' < 3;$$

$$4 \leq c \leq 5;$$

$$0 \leq d \leq 1,5;$$

$$0 \leq e \leq 0,8;$$

$$0 \leq f \leq 1;$$

$$0 < g < 0,05;$$

$$0 \leq h \leq 1;$$

$$0 \leq i \leq 0,5;$$

$$0 \leq j \leq 0,5.$$

2. Ferritmaterial nach Anspruch 1, wobei $0,67 \leq b' < 3$.

3. Bauteil, umfassend das Ferritmaterial nach einem der Ansprüche 1 oder 2 und Metallisierungen, die aus Silber bestehen können.

4. Zirkulator, umfassend das Ferritmaterial nach einem der Ansprüche 1 oder 2 und Metallisierungen, die aus Silber bestehen können.

5. Isolator, umfassend das Ferritmaterial nach einem der Ansprüche 1 oder 2 und Metallisierungen, die aus Silber bestehen können.

6. Verfahren zur Herstellung eines Ferritmaterials nach einem der Ansprüche 1 oder 2, wobei das Verfahren Folgendes umfasst:

   - das Wiegen von Rohmaterialien vom Typ Oxide oder Carbonate;
   - ein erstes Mahlen der Rohstoffe;
   - einen Schritt des Kalzinierens (ebenfalls als Schamottieren bezeichnet) der gemahlenen Rohstoffe bei einer Temperatur zwischen 750 °C und 800 °C, durch den das Ferritrohmaterial erzielt werden kann;
   - ein zweites Mahlen des Pulvers aus rohem Ferritmaterial;
   - das Zugeben eines Lithiumsalz-Flussmittels, bei dem es sich um $Li_2CO_3$, $Li_2O$, LiF oder LiCl handelt, zu dem Pulver aus rohem Ferritmaterial.

7. Verfahren zur Herstellung eines mehrere Elemente enthaltenden Bauteils, das ein Ferritmaterial nach einem der Ansprüche 1 oder 2 enthält, **dadurch gekennzeichnet, dass**:

   - das genannte Ferritmaterial anhand des Verfahrens nach Anspruch 6 hergestellt wird;
   - ein Sintervorgang durchgeführt wird, während dessen das Ferritmaterial mit mindestens einem der anderen Elemente des Bauteils oder mit einem Vorläufer des Elements durch ein Co-Sinterverfahren fest verbunden wird.

8. Verfahren zur Herstellung eines Bauteils nach Anspruch 7, **dadurch gekennzeichnet, dass** mindestens eines der anderen Elemente eine Metallschicht ist.

9. Verfahren zur Herstellung eines Bauteils nach Anspruch 8, **dadurch gekennzeichnet, dass** das Metall Silber ist.

**Claims**

1. A ferrite material, **characterised in that** it has the following chemical formula:

$$(1-x)\ (Y_aTR_bBi_{b'}Fe_cAl_dIn_eCa_fCu_gZr_hCo_iSi_jO_{12\pm y}) + x\ (Li_2CO_3 \text{ or } Li_2O \text{ or } LiF \text{ or } LiCl)$$

   with x mass percent ranging between 0.1 and 2,
   with TR being a rare earth or a combination of rare earths which does not comprise the element Y,

$$-1 \leq \gamma \leq 1;$$

$$3\ (a + b + b' + c + d + e) + 2\ (f + g + i) + 4\ (h + j) = 24 \pm 2\gamma;$$

$$0 \leq a \leq 2;$$

$$0 \leq b \leq 1.5;$$

$$0.1 < b' < 3;$$

$$4 \leq c \leq 5;$$

$$0 \leq d \leq 1.5;$$

$$0 \leq e \leq 0.8;$$

$$0 \leq f \leq 1;$$

$$0 < g < 0.05;$$

$$0 \leq h \leq 1;$$

$$0 \leq i \leq 0.5;$$

$$0 \leq j \leq 0.5.$$

2. The ferrite material according to claim 1, wherein $0.67 \leq b' < 3$.

3. A component comprising the ferrite material according to any of claims 1 or 2 and metallisations that can be made of silver.

4. A circulator comprising the ferrite material according to any of claims 1 or 2 and metallisations that can be made of silver.

5. An insulator comprising the ferrite material according to any of claims 1 or 2 and metallisations that can be made of silver.

6. A method for manufacturing a ferrite material according to any of claims 1 or 2, said method comprising:

   - weighing raw materials such as oxides or carbonates;
   - a first step of milling said raw materials;
   - a step of calcinating (also called firing) said milled raw materials at a temperature ranging between 750 °C and 800 °C in order to obtain the raw ferrite material;
   - a second step of milling said raw ferrite material powder;
   - adding a lithium salt flux, which can be $Li_2CO_3$, $Li_2O$, LiF or LiCl, to said raw ferrite material powder.

7. A method for manufacturing a component containing several elements including a ferrite material according to any of claims 1 or 2, **characterised in that**:

   - said ferrite material is prepared using the method according to claim 6;
   - a sintering operation is carried out, during which operation said ferrite material is consolidated with at least one of said other elements of said component or with a precursor of said element using a co-sintering method.

8. The method for manufacturing a component according to claim 7, **characterised in that** at least one of the other elements is a metal layer.

9. The method for manufacturing a component according to claim 8, **characterised in that** the metal is silver.

[Fig. 1]

[Fig 2a]

[Fig 2b]

[Fig 3a]

[Fig 3b]

EP 3 838 865 B1

[Fig 4]

[Fig 5]

14

[Fig 6a]

Fig 6b]

**RÉFÉRENCES CITÉES DANS LA DESCRIPTION**

**Documents brevets cités dans la description**

- EP 1829061 A1
- EP 2622613 A1
- FR 3044309

**Littérature non-brevet citée dans la description**

- Nouveaux grenats ferrimagnétiques à basse température de frittage pour applications micro-ondes.. **L. PINIER**. Thèse de doctorat. l'Ecole Polytechnique, 2006
- Etude et mise au point de ferrites de structure grenat à basse température de frittage pour intégration dans les circulateurs hyperfréquences.. **L. QASSYM**. Thèse de doctorat. l'Université Paris Saclay, 2017